(19)

Europäisches
Patentamt
European
Patent Office
Office européen
des brevets

(11) **EP 2 858 290 A1**

(12) **EUROPEAN PATENT APPLICATION**

(43) Date of publication:
08.04.2015 Bulletin 2015/15

(51) Int Cl.:
*H04L 1/18* (2006.01)    *H04L 5/00* (2006.01)

(21) Application number: 14186814.1

(22) Date of filing: 29.09.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.10.2013 US 201361886671 P
23.09.2014 US 201414493359

(71) Applicant: **Industrial Technology Research
Institute**
**Chutung, Hsinchu 310 (TW)**

(72) Inventor: **Lee, Chien-Min
221 New Taipei City (TW)**

(74) Representative: **Straus, Alexander et al
Patentanwälte
Becker, Kurig, Straus
Bavariastrasse 7
80336 München (DE)**

(54) **Method of handling HARQ resource for FDD carrier and related communication device**

(57)    A method of determining hybrid automatic repeat request (HARQ) resource of an uplink (UL) subframe of a frequency-division duplexing (FDD) carrier for an advanced communication device comprises determining an association index according to an operation of the FDD carrier; determining a new association set according to the association index and an association set of the UL subframe of a UL/downlink (UL/DL) configuration; and determining the HARQ resource of the UL subframe according to the association index and the new association set.

FIG. 4

**Description**

Field of the Invention

The present invention relates to a method of handling hybrid automatic repeat request (HARQ) resource for a frequency-division duplexing (FDD) carrier and related communication device.

Background of the Invention

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmissions/reception, uplink (UL) multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

Different from the LTE/LTE-A system operating in a frequency-division duplexing (FDD) mode (or simply FDD system), transmission directions of subframes of a frequency band in the LTE/LTE-A system operating in a time-division duplexing (TDD) mode (or simply TDD system) may be different. That is, the subframes in the same frequency band are divided into UL subframes, downlink (DL) subframes and special subframes according to the UL/DL configuration specified in the 3GPP standard.

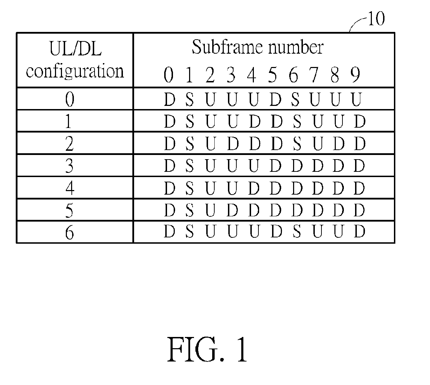

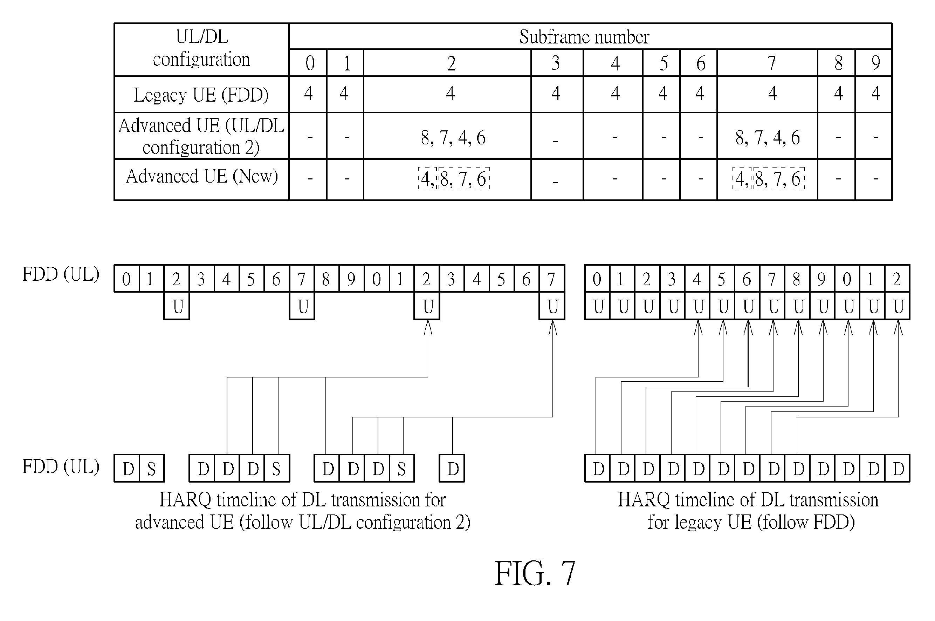

Fig. 1 is a table 102 of the UL/DL configurations with subframes and corresponding directions. In Fig. 1, 7 UL/DL configurations are shown, wherein each of the UL/DL configurations indicates a set of transmission directions (hereinafter, directions, for short) for 10 subframes, respectively. Each subframe is indicated with a corresponding subframe number (i.e., subframe index) in Fig. 1. In detail, "U" represents that the subframe is a UL subframe where UL data is transmitted, and "D" represents that the subframe is a DL subframe where DL data is transmitted. "S" represents that the subframe is a special subframe where control information and maybe data (according to the special subframe configuration) is transmitted, and the special subframe can also be seen as the DL subframe in the prior art. Note that the eNB may configure a UL/DL configuration to a UE via a higher layer signaling (e.g., System Information Block Type 1 (SIB1)) or a physical layer signaling (e.g., DL control information (DCI)).

An advanced UE which may be a half-duplex UE (or a UE operating in the half-duplex mode) may be configured with a TDD carrier and a FDD carrier, while a legacy UE may be configured with only the FDD carrier. In this situation, a collision of HARQ resources may occur if the advanced UE and the legacy UE intend to transmit HARQ feedbacks in a same UL subframe of the FDD carrier. The collision may occur because the advanced UE and the legacy UE transmit the HARQ feedbacks by using overlapped HARQ resource (e.g., the same HARQ resource) in the UL subframe, because rules for transmitting the HARQ feedbacks followed by the advanced UE and the legacy UE may be different. The network cannot detect the HARQ feedbacks transmitted by the advanced UE and the legacy UE. Communications between the network and the legacy UE and the advanced UE cannot proceed regularly.

Thus, how to solve the collision of the HARQ resources occurred when the advanced UE and the legacy UE operate in the same FDD carrier is an important issue to be improve upon.

Summary of the Invention

The present invention provides a method and related communication device for handling HARQ resources for the FDD carrier which solves the abovementioned problem.

This is achieved by a method and a communication device handling the HARQ resources according to claims 1, 10 and 15. The dependent claims pertain to corresponding further developments and improvements.

A method of determining hybrid automatic repeat request (HARQ) resource of an uplink (UL) subframe of a frequency-division duplexing (FDD) carrier for an advanced communication device comprises determining an association index according to an operation of the FDD carrier; determining a new association set according to the association index and an association set of the UL subframe of a UL/downlink (UL/DL) configuration; and determining the HARQ resource of the UL subframe according to the association index and the new association set.

Brief Description of the Drawings

Fig. 1 is a table of the UL/DL configurations with subframes and corresponding directions.
Fig. 2 is a schematic diagram of a wireless communication system according to an example of the present invention.
Fig. 3 is a schematic diagram of a communication device according to an example of the present invention.
Fig. 4 is a flowchart of a process according to an example of the present invention.
Fig. 5 is a table of association sets according to an example of the present invention.
Fig. 6 is a table of association sets according to an example of the present invention.
Figs. 7-9 are schematic diagrams of association sets of the advanced UE and the legacy UE according to examples of the present invention.
Fig. 10 is a schematic diagram of resource regions according to an example of the present invention.
Fig. 11 is a flowchart of a process according to an example of the present invention.
Figs. 12-13 are schematic diagrams of association sets of the advanced UE and the legacy UE according to examples of the present invention.
Fig. 14 is a schematic diagram of resource regions according to an example of the present invention.

Detailed Description

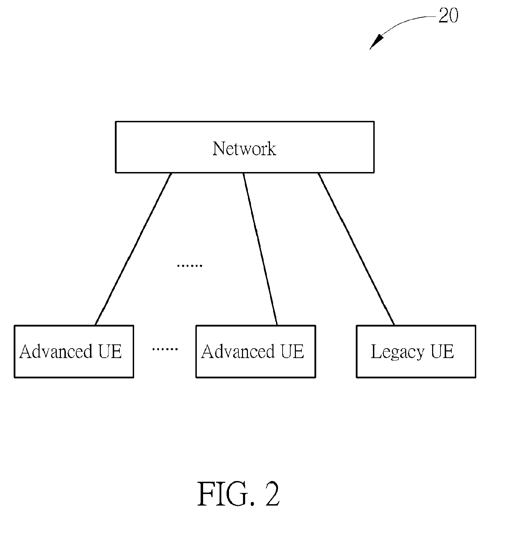

Fig. 2 is a schematic diagram of a wireless communication system 20 according to an example of the present invention. The wireless communication system 20 is briefly composed of a network, advanced user equipments (UEs) (i.e., advanced communication devices) and a legacy UE (i.e., legacy communication device). The wireless communication system 20 may support a frequency-division duplexing (FDD) mode and/or a time-division duplexing (TDD) mode, e.g., supports a FDD carrier and/or a TDD carrier. That is, the network and the UEs may communicate with each other by using uplink (UL) subframes and downlink (DL) subframes of the TDD carrier according to a UL/DL configuration of the TDD carrier, when the TDD carrier is configured to the UEs. In addition, the network and the UEs may communicate with each other by using UL subframes of a UL FDD carrier and/or DL subframes of a DL FDD carrier, when the FDD carrier(s) are configured to the UEs.

In Fig. 2, the network and the UEs are simply utilized for illustrating the structure of the wireless communication system 20. Practically, the network can be a universal terrestrial radio access network (UTRAN) comprising a plurality of Node-Bs (NBs) in a universal mobile telecommunications system (UMTS). Alternatively, the network can be an evolved UTRAN (E-UTRAN) comprising a plurality of evolved NBs (eNBs) and/or relays in a long term evolution (LTE) system, a LTE-Advanced (LTE-A) system or an evolution of the LTE-A system.

Furthermore, the network can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a UE (advanced UE or legacy UE), the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information can be processed by both the UTRAN/E-UTRAN and the core network, and the decisions are made after coordination and/or cooperation are performed by the UTRAN/E-UTRAN and the core network. A UE (advanced UE or legacy UE) can be a mobile phone, a laptop, a tablet computer, an electronic book or a portable computer system, but is not limited. In addition, the network and the UE can be seen as a transmitter or a receiver according to direction, e.g., for a UL, the UE is the transmitter and the network is the receiver, and for a DL, the network is the transmitter and the UE is the receiver. More specifically, for the network, the direction of the transmission is DL, and the direction of the reception is UL. For the UE, the direction of the transmission is UL, and the direction of the reception is DL.

The advanced UE may communicate with the network via multiple component carriers (CCs) (e.g., serving cells) with different modes. For example, the advanced UE may communicate with the network via two component carriers, wherein one of the component carriers is a FDD carrier and the other one of the component carrier is a TDD carrier. Further, the FDD carrier may be a UL carrier, and the TDD carrier may be a DL carrier. In another example, the FDD carrier may be a DL carrier, and the TDD carrier may be a UL carrier. In addition, the FDD carrier and the TDD may be managed (e.g., allocated, arranged) by the same network entity (e.g., the same eNB) where an ideal backhaul is possible, or may be managed by different network entities where a nonideal backhaul is possible. In another example, both of the carriers may be FDD carriers. The advanced UE may know the mode operated by the legacy UE. For example, the advanced UE may know that the legacy UE operates in the FDD mode, i.e., communicates with the network via a FDD carrier. The advanced UE may refer to a communication device supporting the 3rd Generation Partnership Project (3GPP) Rel-11 standard or later versions. However, a legacy UE may also have functions similar to those supported by the advanced UE via an update, and the legacy UE belongs to an advanced UE in this situation. Preferably, the advanced UE may a half-duplex device. In certain situations, the advanced UE may perform both cellular communication (e.g., with the network) and device-to-device (D2D) communication (e.g., with another D2D device).

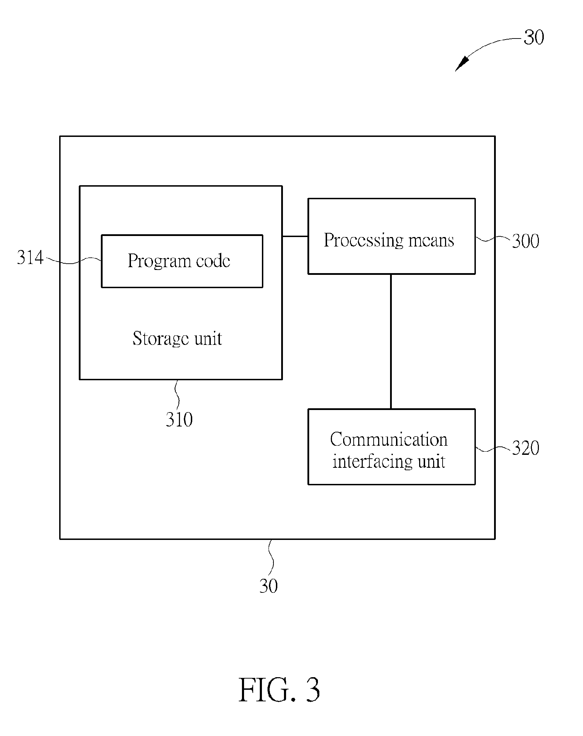

Fig. 3 is a schematic diagram of a communication device 30 according to an example of the present invention. The communication device 30 can be an advanced UE, the legacy UE and/or the network shown in Fig. 2, but is not limited herein. The communication device 30 may include a processing means 300 such as a microprocessor or Application Specific Integrated Circuit (ASIC), a storage unit 310 and a communication interfacing unit 320. The storage unit 310 may be any data storage device that can store a program code 314, accessed and executed by the processing means 300. Examples of the storage unit 310 include but are not limited to a subscriber identity module (SIM), read-only memory (ROM), flash memory, random-access memory (RAM), CD-ROM/DVD-ROM/BD-ROM, magnetic tape, hard disk, optical data storage device, non-volatile storage unit, non-transitory computer-readable medium (e.g., tangible media), etc. The communication interfacing unit 320 is preferably a transceiver and is used to transmit and receive signals (e.g., messages or packets) according to processing results of the processing means 300.

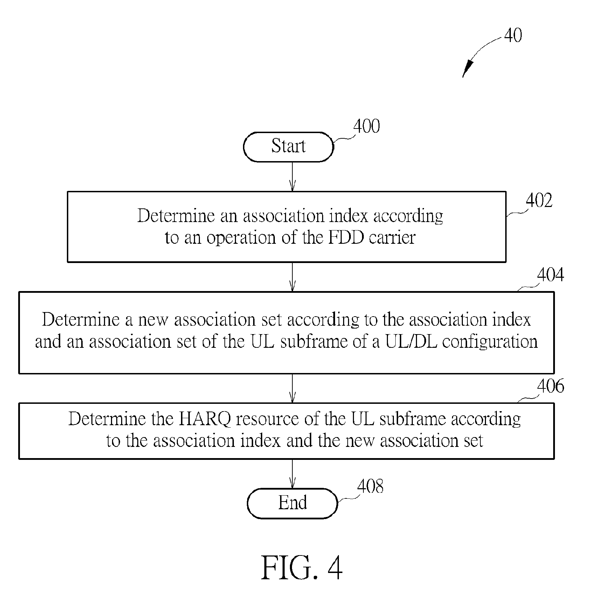

Fig. 4 is a flowchart of a process 40 according to an example of the present invention. The process 40 is utilized in an advanced UE shown in Fig. 2, for determining hybrid automatic repeat request (HARQ) resource of a UL subframe of a FDD carrier. The process 40 may be compiled into the program code 314 and includes the following steps:

Step 400:    Start.

Step 402:    Determine an association index according to an operation of the FDD carrier.

Step 404:    Determine a new association set according to the association index and an association set of the UL subframe of a UL/DL configuration.

Step 406:    Determine the HARQ resource of the UL subframe according to the association index and the new association set.

Step 408:    End.

According to the process 40, the advanced UE determines an association index according to an operation of the FDD carrier. Then, the advanced UE determines a new association set according to the association index and an association set of the UL subframe of a UL/DL configuration. Thus, the advanced UE may transmit a HARQ feedback via the HARQ resource in response to at least one reception performed in at least one previous DL subframe of the FDD carrier. That is, the FDD carrier may be used by the advanced UE, or by both the advanced UE and the legacy UE. The advanced UE determines the HARQ resource according to both the UL/DL configuration and the operations of the FDD carrier, when the advanced UE intends to transmit the HARQ feedback via the FDD carrier. It should be noted that, the UL/DL configuration may correspond to a TDD carrier configured to the advanced UE, and the advanced UE may not be using the TDD carrier to communicate with the network when performing the process 40. In another example, the advanced UE may be using both the FDD carrier and the TDD carrier to communicate with the network, when performing the process 40. In another example, the UL/DL configuration may be configured by the network to the advanced UE via a higher layer signaling (e.g., radio resource control (RRC) signaling). Thus, collision of the HARQ resources is solved, and the advanced UE can mitigate effects to operations (e.g., transmission and/or reception) of the legacy UE. As a result, both the advanced UE and the legacy UE can operate regularly.

Methods according to which the process 40 is realized are not limited to the above description. For example, the association index may not overlap with the new association set. That is, the association index is different from association indices in the new association set. A resource region corresponding to the association index may not overlap with a resource region corresponding to the new association set. For example, a starting point of a resource region corresponding to the new association set may be at least determined according to a value configured by a higher layer signaling (e.g., RRC signaling). In another example, a starting point of a resource region corresponding to the new association set may be at least determined according to a maximum number of control channel elements (CCEs) of the FDD carrier. In another example, a starting point of a resource region corresponding to the new association set may be at least determined according to a total number of CCEs of another DL subframe in which a reception is performed and the reception triggers a HARQ feedback in the UL subframe. An interleaving may be performed on the new association set, e.g., resources corresponding to the association indices in the new association set are interleaved together. In addition, the legacy UE may be restricted to perform a reception in a DL subframe of the FDD carrier, and the DL subframe corresponds to the UL subframe according to the operation of the FDD carrier. That is, the legacy UE may be restricted to perform reception(s) only in certain DL subframes (e.g., the DL subframes 1-3) of the FDD carrier, such that the legacy UE only needs to transmit a corresponding UL subframe. In other words, the UL subframe(s) in which the legacy UE may transmit the HARQ feedback is controlled. Thus, the advanced UE may only need to modify its operation in the UL subframes in which the legacy UE may transmit the HARQ feedback(s). In addition, the advanced UE may determine at least one sequence index corresponding to the association index and the new association set, respectively. Then, the advanced UE may determine the HARQ resource of the UL subframe according to the at least one sequence index, the association index and the new association set. In another example, the advanced UE may determine at least one sequence index corresponding to the new association set, respectively. Then, the advanced UE may determine the HARQ resource of the UL subframe according to the at least one sequence index and the new association set. Further, a set of the at least one sequence index corresponding to the new association set may be related to one of the at least one sequence index corresponding to the association index.

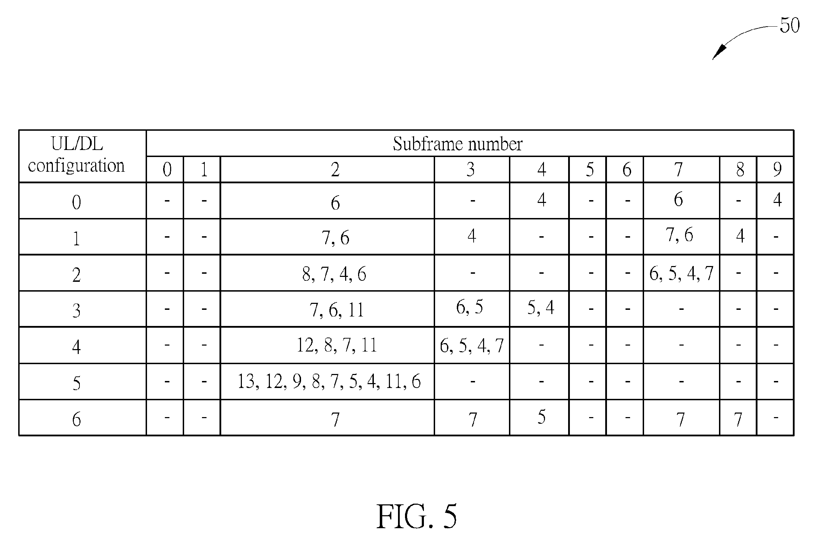

Fig. 5 is a table 50 of association sets according to an example of the present invention. The association sets for UL/DL configurations 0-6 and subframe indices 0-9 are shown in the table 50. Taking the subframe 2 and the UL/DL configuration 2 as an example, the association set is (8, 7, 4, 6), i.e., the association indices are 8, 7, 4 and 6. HARQ resource in the subframe 2 of a frame m is used for responding at least one reception occurred in subframes 4, 5, 8 and/or 6 of a frame (m-1). The reason is that distances between the subframe 2 of the frame m and the subframes 4, 5, 8 and 6 of the frame (m-1) are 8, 7, 4 and 6, respectively.

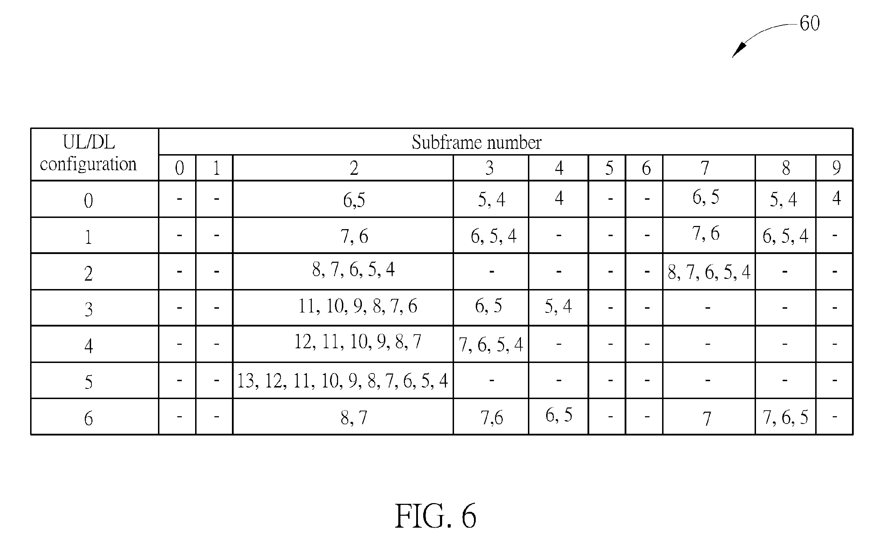

Fig. 6 is a table 60 of association sets according to an example of the present invention. Similar to those in the table 50, the association sets for UL/DL configurations 0-6 and subframe indices 0-9 are shown in the table 60. A method according to which the table 60 is used is the same as that for the table 50, and is not narrated herein.

Fig. 7 is a schematic diagram of association sets of the advanced UE and the legacy UE according to an example of the present invention. In detail, the advanced UE and the legacy UE communicate with the network via a FDD carrier, and the advanced UE may be further configured with a UL/DL configuration 2 by the network for transmitting the HARQ feedback. Note that the FDD rule for transmitting the HARQ feedback is that a HARQ feedback is transmitted in a subframe (n+4) for responding to a reception performed in a subframe n. Thus, the association index for the FDD carrier is 4 for all subframes. Taking the subframe 2 of the FDD carrier as an example, the association set of the UL subframe 2 which includes the association set indices 8, 7, 4 and 6 will be used for determining HARQ resource, when the advanced UE intends to transmit a HARQ feedback in the subframe 2 of the FDD carrier. In addition, the HARQ feedback in the subframe 2 of the present frame m may be for responding to one or more DL receptions in DL subframes 4, 5, 8 and 6 of the previous frame (m-1) corresponding to the association set indices 8, 7, 4 and 6, respectively.

According to the process 40 and the above description, the advanced UE can determine that the association index is 4 according to the operation the FDD carrier, and can determine that the new association set is (8, 7, 6) according to the association index 4 and the association set (8, 7, 4, 6) of the UL subframe 2 of the UL/DL configuration 2. As can be seen, the new association set (8, 7, 6) does not overlap with the association index 4. In one example, the association index 4 may map to sequence index 0, and the association indices in the new association set (8, 7, 6) may map to sequence indices 0, 1, 2, respectively. Then, the advanced UE may determine the HARQ resource according to the sequence indices 0, (0, 1, 2), the association index 4, and the new association set (8, 7, 6). Or, the advanced UE may determine the HARQ resource according to the sequence indices (0, 1, 2) and the new association set (8, 7, 6). In another example, the association index 4 may map to sequence index 0, and the association indices in the new association set (8, 7, 6) may map to sequence indices 1, 2 and 3, respectively. Then, the advanced UE may determine the HARQ resource according to the sequence indices 0, (1, 2, 3), the association index 4, and the new association set (8, 7, 6). Or, the advanced UE may determine the HARQ resource according to the sequence indices (1, 2, 3) and the new association set (8, 7, 6). Note that sequences of the association indices in the new association set are not limited to the above description. For example, the new association set can be (7, 8, 6), (6, 7, 8), (8, 6, 7), etc. Preferably, a resource region (e.g., physical UL control channel (PUCCH) resource region) corresponding to the association index 4 does not overlap with a resource region corresponding to the new association set (8, 7, 6). Accordingly, the HARQ resource in the resource region corresponding to the association index does not overlap with the HARQ resource in the resource region corresponding to the new association set. In addition, the determination of the HARQ resource in the subframe 2 is illustrated in the present example, those skilled in the art can readily determine the HARQ resource in other subframes according to the above description. Note that an interleaving may be performed on the new association set (8, 7, 6). Thus, the advanced UE can mitigate effects to operations (e.g., transmission and/or reception) of the legacy UE, when transmitting the HARQ feedback via the HARQ resource determined according to the above description. Collision of the HARQ resources is solved. As a result, both the advanced UE and the legacy UE can operate regularly.

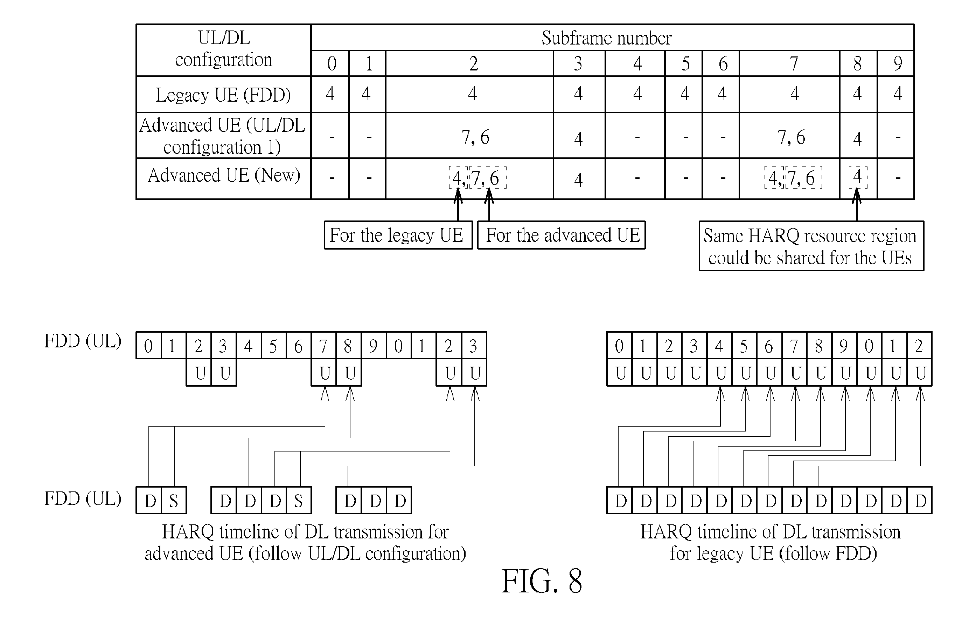

Fig. 8 is a schematic diagram of association sets of the advanced UE and the legacy UE according to an example of the present invention. In detail, the advanced UE and the legacy UE communicate with the network via a FDD carrier, and the advanced UE may be further configured with a UL/DL configuration 1 by the network for transmitting the HARQ feedback. As stated previously, the association index for the FDD carrier is 4 for all subframes. Taking the subframe 2 of the FDD carrier as an example, the association set of the UL subframe 2 which includes the association set indices 7 and 6 will be used for determining HARQ resource, when the advanced UE intends to transmit a HARQ feedback in the subframe 2 of the FDD carrier. In addition, the HARQ feedback in the subframe 2 of the present frame m may be for responding to one or more DL receptions in DL subframes 5 and 6 of the previous frame (m-1) corresponding to the association set indices 7 and 6, respectively.

According to the process 40 and the above description, the advanced UE can determine that the association index is 4 according to the operation the FDD carrier, and can determine that the new association set is (7, 6) according to the association index 4 and the association set (7, 6) of the subframe 2 of the UL/DL configuration 1. As can be seen, the new association set (7, 6) does not overlap with the association index 4. In one example, the association index 4 may map to sequence index 0, and the association indices in the new association set (7, 6) may map to sequence indices 0 and 1, respectively. Then, the advanced UE may determine the HARQ resource according to the sequence indices 0, (0, 1), the association index 4, and the new association set (7, 6). Or, the advanced UE may determine the HARQ resource according to the sequence indices (0, 1) and the new association set (7, 6). In another example, the association index 4 may map to sequence index 0, and the association indices in the new association set (7, 6) may map to sequence indices 1 and 2, respectively. Then, the advanced UE may determine the HARQ resource according to the sequence indices 0, (1, 2), the association index 4, and the new association set (7, 6). Or, the advanced UE may determine the HARQ resource according to the sequence indices (1, 2) and the new association set (7, 6). Note that sequences of the association indices in the new association set are not limited to the above description. For example, the new association set can be (6, 7). Preferably, a resource region (e.g., PUCCH resource region) corresponding to the association index 4 does not overlap with a resource region corresponding to the new association set (7, 6). Accordingly, the HARQ resource in the resource region corresponding to the association index does not overlap with the HARQ resource in the resource region corresponding to the new association set. In addition, the determination of the HARQ resource in the subframe 2 is illustrated in the present example, those skilled in the art can readily determine the HARQ resource in other subframes according to the above description. Note that an interleaving may be performed on the new association set (7, 6).

It should be noted that association indices of the subframe 8 for the advanced UE and the legacy UE are the same (i.e., 4), as shown in Fig. 8. According to the above description, the advanced UE can determine that the association index is 4 according to the operation the FDD carrier, and can determine that the new association set is a null set according to the association index 4 and the association set (4) of the subframe 8 of the UL/DL configuration 1. Accordingly, the advanced UE and the legacy UE may share the same HARQ resource region according to the same association index 4. Thus, the advanced UE can mitigate effects to operations (e.g., transmission and/or reception) of the legacy UE, when transmitting the HARQ feedback via the HARQ resource determined according to the above description. Collision of the HARQ resources is solved. As a result, both the advanced UE and the legacy UE can operate regularly.

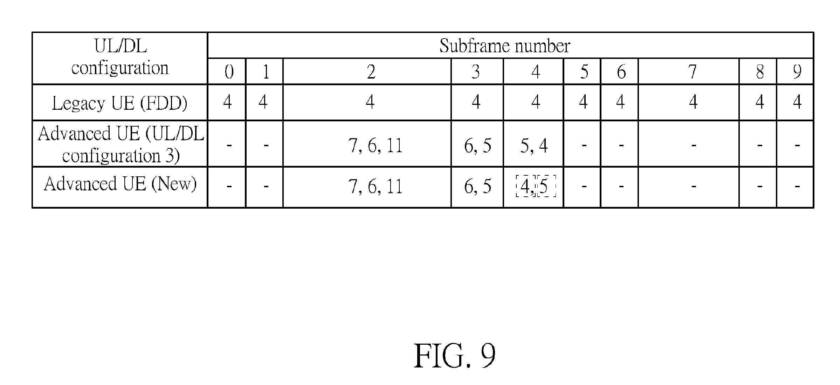

Fig. 9 is a schematic diagram of association sets of the advanced UE and the legacy UE according to an example of the present invention. In detail, the advanced UE and the legacy UE communicate with the network via a FDD carrier, and the advanced UE may be further configured with a UL/DL configuration 3 by the network for transmitting the HARQ feedback. As stated previously, the association index for the FDD carrier is 4 for all subframes. In the present example, the legacy UE is restricted to perform receptions only in the DL subframes 0 and 5. Accordingly, the legacy UE only needs to transmit the HARQ feedbacks in the UL subframes 4 and 9. Thus, the advanced UE only needs to perform the process 40 and/or the above description for the UL subframe 4, and the association sets for the UL subframes 2 and 3 of the UL/DL configuration 3 can be reused. Complexity for determining the HARQ resource can be reduced. The determination of HARQ resource in the UL subframe 4 of the FDD carrier can be referred to the previous description, and is not narrated herein.

As be stated previously, a resource region corresponding to the association index should not overlap with a resource region corresponding to the new association set. In one example, the HARQ resource $n_{PUCCH,m}^{(1,p_0)}$ in the resource regions can be determined according to the following equation:

$$n_{PUCCH,m}^{(1,p_0)} = \begin{cases} n_{CCE,m} + N_{PUCCH}^{(1)}, & m = 0 \\ (M-m)N_c + (m-1)N_{c+1} + n_{CCE,m} + N_{PUCCH}^{(1)} + N, & m > 0 \end{cases} \quad \text{(Eq. 1)}$$

wherein the first row is for determining the HARQ resource corresponding to the association index, and the second is for determining the HARQ resource corresponding to the new association set. Note that the equation (Eq. 1) is preferably used for examples where sequence indices *m* are (0, 1)(where M=2), (0, 1, 2)(where M=3), (0, 1, 2, 3)(where M=4), etc. $n_{CCE,m}$ is the number of the first CCE (i.e., lowest CCE index of the corresponding DL control information (DCI)) that is transmitted in the physical DL control channel (PDCCH), wherein the corresponding DCI indicates a reception (e.g., in a PDSCH) that is to be responded by a HARQ feedback transmitted via the HARQ resource. $N_{PUCCH}^{(1)}$ is configured by a higher layer signaling. M is the number of the sequence indices, and m is the sequence index. N is used to shift the resource region of the new association set such that the resource regions of the association index and the new association set are not overlapped. The equation of $(M - m)N_c + (m - 1)N_{c+1} + n_{CCE,m}$ represents the effect of interleaving. The advanced UE may select a value c from (0, 1, 2, 3) to make the equations $N_c \leq n_{CCE,m} \leq N_{c+1}$ and

$$N_c = max\{0, \lfloor [N_{RB}^{DL}(N_{SC}^{RB} \cdot c - 4)]/36 \rfloor\}$$ hold, where $N_{SC}^{RB}$ is a resource block size in the frequency domain, which is expressed as a number of subcarriers, and $N_{RB}^{DL}$ is a DL bandwidth configuration, which is expressed in units of $N_{SC}^{RB}$. When there are two transmit antennas at the advanced UE, the equation (Eq. 1) can be used for the first transmit antenna (Po). The HARQ resource $n_{PUCCH,m}^{(1,p_1)}$ in the resource regions for the second antenna can be determined according to the following equation:

$$n_{PUCCH,m}^{(1,p_1)} = \begin{cases} n_{CCE,m} + N_{PUCCH}^{(1)}, & m = 0 \\ (M - m)N_c + (m - 1)N_{c+1} + n_{CCE,m} + 1 + N_{PUCCH}^{(1)} + N, & m > 0 \end{cases}$$ (Eq. 2).

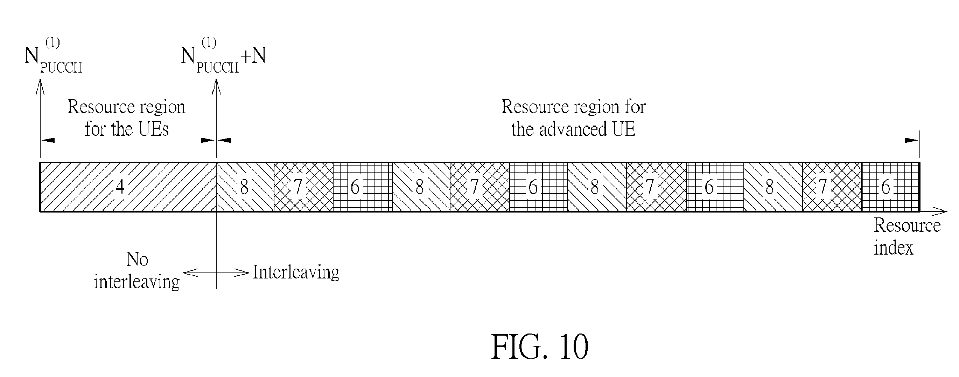

Fig. 10 is a schematic diagram of resource regions according to an example of the present invention. Fig. 10 is used as an example for illustrating the resource regions in which the HARQ resources are located. As shown in Fig. 10, a first resource region determined according to the association index 4 do not overlap with a second resource region determined according to the new association set (8, 7, 6). The start of the resource index for the first resource region is $N_{PUCCH}^{(1)}$, and the start of the resource index for the second resource region is $N_{PUCCH}^{(1)} + N$ (or a new value $N_{PUCCH,advanced}^{(1)}$). In addition, the HARQ resource determined according to the association index 4 is not interleaved and is used for transmitting the HARQ feedback by the advanced UE, while the HARQ resource determined according to the new association set (8, 7, 6) is interleaved in the second resource region according to the TDD carrier and is also used for transmitting the HARQ feedback by the advanced UE.

In addition, the HARQ resource $n_{PUCCH,m}^{(1,p_0)}$ in the resource regions can also be determined according to the following equations:

$$n_{PUCCH,m_1}^{(1,p_0)} = n_{CCE,m_1} + N_{PUCCH}^{(1)}, \ m_1 = 0, M_1 = 1 \quad (Eq. 3),$$

$$n_{PUCCH,m_2+1}^{(1,p_0)} = (M_2 - m_2 - 1)N_c + m_2 N_{c+1} + n_{CCE,m_2} + N_{PUCCH}^{(1)} + N, m_2 \geq 0, M_2 \geq 0 \quad (Eq. 4),$$

which can be seen as another version of the equation (Eq. 1) for illustrating the cases where sequence indices are $(m_1=0, m_2=0)$, $(m_1=0, m_2=(0, 1))$, $(m_1=0, m_2=(0, 1, 2))$, etc. The equation (Eq. 3) is for determining the HARQ resource corresponding to the association index, and the equation (Eq. 4) is for determining the HARQ resource corresponding to the new association set. Taking the sequence indices $(m_1=0, m_2=(0, 1, 2))$ for the subframe 2 in Fig. 7 as an example, the sequence indices can divided into 0 and (0, 1, 2), and $M_1 = 1$ and $M_2 = 3$. The association index 4 may map to sequence index 0, and the association indices in the new association set (8, 7, 6) may map to sequence indices 0, 1, 2, respectively. Then, the advanced UE may determine the HARQ resource according to the sequence indices 0, (0, 1, 2), the association index 4, and the new association set (8, 7, 6).

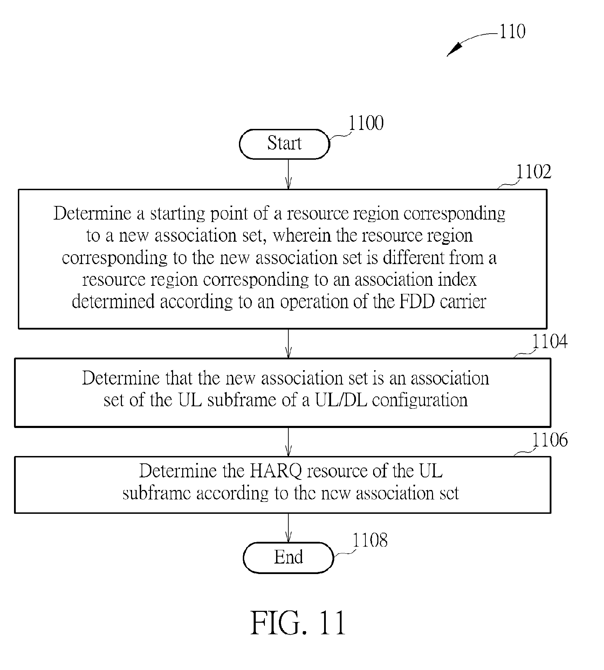

Fig. 11 is a flowchart of a process 110 according to an example of the present invention. The process 110 is utilized in an advanced UE shown in Fig. 2, for determining HARQ resource of a UL subframe of a FDD carrier. The process 110 may be compiled into the program code 314 and includes the following steps:

Step 1100:   Start.
Step 1102:   Determine a starting point of a resource region corresponding to a new association set, wherein the resource region corresponding to the new association set is different from a resource region corresponding to an association index determined according to an operation of the FDD carrier.
Step 1104:   Determine that the new association set is an association set of the UL subframe of a UL/DL configuration.
Step 1106:   Determine the HARQ resource of the UL subframe according to the new association set.
Step 1108:   End.

According to the process 110, the advanced UE determines (e.g., receives) a starting point of a resource region corresponding to a new association set, wherein the resource region corresponding to the new association set is different from a resource region corresponding to an association index determined according to an operation of the FDD carrier. Then, the advanced UE determine that the new association set is an association set of the UL subframe of a UL/DL configuration, and determines the HARQ resource of the UL subframe according to the new association set. Thus, the advanced UE may transmit a HARQ feedback via the HARQ resource corresponding to the new association set in response to at least one reception performed in at least one previous DL subframe of the FDD carrier. That is, the FDD carrier may be operated by the advanced UE, or by both the advanced UE and the legacy UE. The advanced UE determines the HARQ resource according to both the UL/DL configuration and the operations of the FDD carrier, when the advanced UE intends to transmit the HARQ feedback via the FDD carrier. It should be noted that, the UL/DL configuration may correspond to a TDD carrier configured to the advanced UE, and the advanced UE may not be using the TDD carrier to communicate with the network when performing the process 40. In another example, the advanced UE may be using both the FDD carrier and the TDD carrier to communicate with the network, when performing the process 40. In another example, the UL/DL configuration may be configured by the network to the advanced UE via a higher layer signaling (e.g., RRC signaling). Thus, collision of the HARQ resources is solved, and the advanced UE can mitigate effects to operations (e.g., transmission and/or reception) of the legacy UE. As a result, both the advanced UE and the legacy UE can operate regularly.

Methods according to which the process 40 is realized are not limited to the above description. For example, the starting point of the resource region corresponding to the new association set may be at least determined according to a value configured by a higher layer signaling. In another example, the starting point of the resource region corresponding to the new association set may be at least determined according to a maximum number of control channel elements of the duplex mode. In another example, the starting point of the resource region corresponding to the new association set may be at least determined according to a total number of CCEs of another DL subframe in which a reception is performed and the reception triggers a HARQ feedback in the UL subframe. An interleaving for the new association set may be performed according to the UL/DL configuration of the TDD carrier. In addition, the legacy UE may be restricted to perform a reception in a DL subframe of the FDD carrier, and the DL subframe corresponds to the UL subframe according to the operation of the FDD carrier. That is, the legacy UE may be restricted to perform reception(s) only in certain DL subframes (e.g., the DL subframes 1-3) of the FDD carrier, such that the legacy UE only needs to transmit a corresponding UL subframe. In other words, the UL subframe(s) in which the legacy UE may transmit the HARQ feedback is controlled. Thus, the advanced UE may only need to modify its operation in the UL subframes in which the legacy UE may transmit the HARQ feedback(s). In addition, the advanced UE may determine at least one sequence index corresponding to the new association set, respectively. Then, the advanced UE may determine the HARQ resource of the UL subframe according to the at least one sequence index and the new association set.

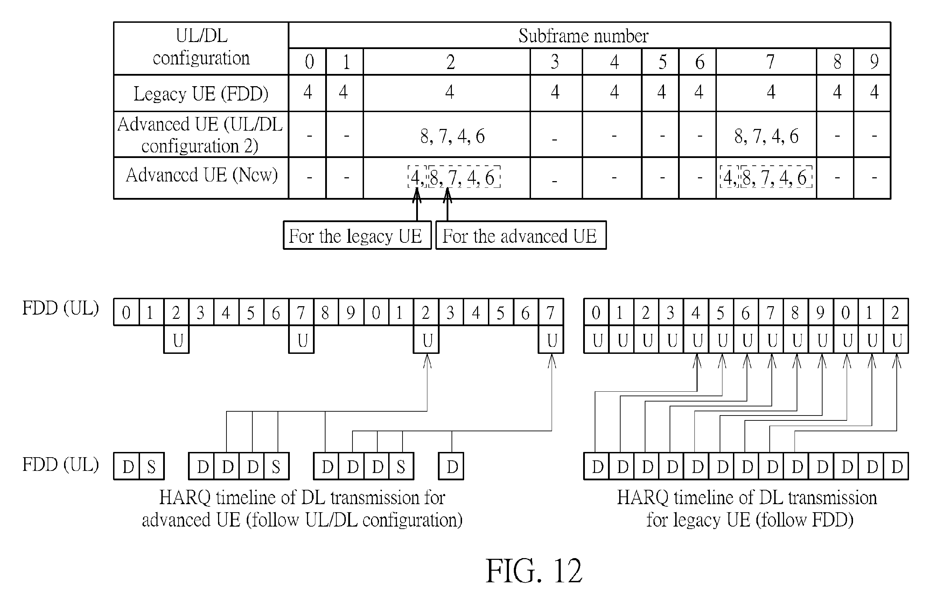

Fig. 12 is a schematic diagram of association sets of the advanced UE and the legacy UE according to an example of the present invention. In detail, the advanced UE and the legacy UE communicate with the network via a FDD carrier, and the advanced UE may be further configured with a UL/DL configuration 2 by the network. Note that the FDD rule for transmitting the HARQ feedback is that a HARQ feedback is transmitted in a subframe (n+4) for responding to a reception performed in a subframe n. Thus, the association index for the FDD carrier is 4 for all subframes. Taking the subframe 2 of the FDD carrier as an example, the association set of the UL subframe 2 which includes the association set indices 8, 7, 4 and 6 will be used for determining HARQ resource, when the advanced UE intends to transmit a HARQ feedback in the subframe 2 of the FDD carrier. In addition, the HARQ feedback in the subframe 2 of the present frame m may be for responding to one or more DL receptions in DL subframes 4, 5, 6 and 8 of the previous frame (m-1) corresponding to the association set indices 8, 7, 4 and 6, respectively.

According to the process 110 and the above description, the advanced UE can determine that the new association set is (8, 7, 4, 6) according to the association set (8, 7, 4, 6) of the UL subframe 2 of the UL/DL configuration 2, wherein a resource region (e.g., PUCCH resource region) corresponding to the new association set (8, 7, 4, 6) is different from a resource region corresponding to the association index 4. The advanced UE may receive a starting point of the resource region corresponding to the new association set from the network. That is, a resource region may be reserved for the legacy UE, such that the advanced UE will use a different resource region. Accordingly, the HARQ resource corresponding to the association index and the HARQ resource corresponding to the new association set are in different resource regions. In one example, the association indices in the new association set (8, 7, 4, 6) may map to sequence indices 0, 1, 2 and 3, respectively. Then, the advanced UE may determine the HARQ resource according to the sequence indices (0, 1, 2, 3) and the new association set (8, 7, 4, 6). In addition, the determination of the HARQ resource in the subframe 2 is illustrated in the present example, those skilled in the art can readily determine the HARQ resource in other subframes according to the above description. Note that an interleaving may be performed on the new association set (8, 7, 4, 6). Thus, the advanced UE can mitigate effects to operations (e.g., transmission and/or reception) of the legacy UE, when transmitting the HARQ feedback via the HARQ resource determined according to the above description. Collision of the HARQ resources is solved. As a result, both the advanced UE and the legacy UE can operate regularly.

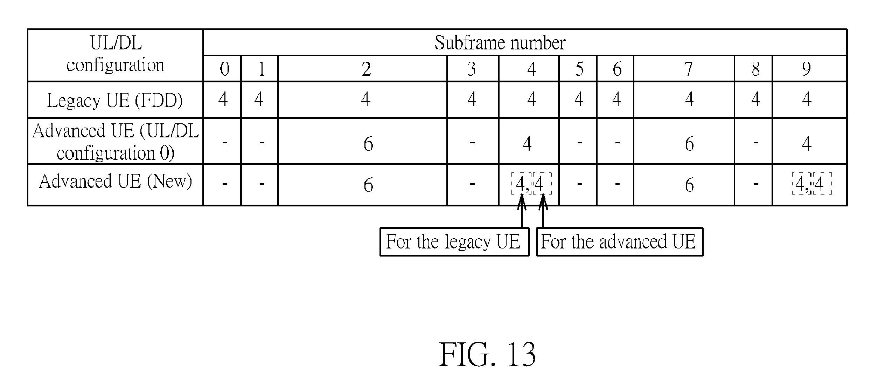

Fig. 13 is a schematic diagram of association sets of the advanced UE and the legacy UE according to an example of the present invention. In detail, the advanced UE and the legacy UE communicate with the network via a FDD carrier, and the advanced UE may be further configured with a UL/DL configuration 0 by the network. As stated previously, the association index for the FDD carrier is 4 for all subframes. In the present example, the legacy UE is restricted to perform receptions only in the DL subframes 0 and 5. Accordingly, the legacy UE only needs to transmit the HARQ feedbacks in the UL subframes 4 and 9. Thus, the advanced UE only needs to perform the process 110 and/or the above description for the UL subframes 4 and 9, and the association sets for the UL subframes 2 and 7 of the UL/DL configuration 0 can be reused. Complexity for determining the HARQ resource can be reduced. The determination of HARQ resources in the UL subframes 4 and 9 of the FDD carrier can be referred to the previous description, and is not narrated herein.

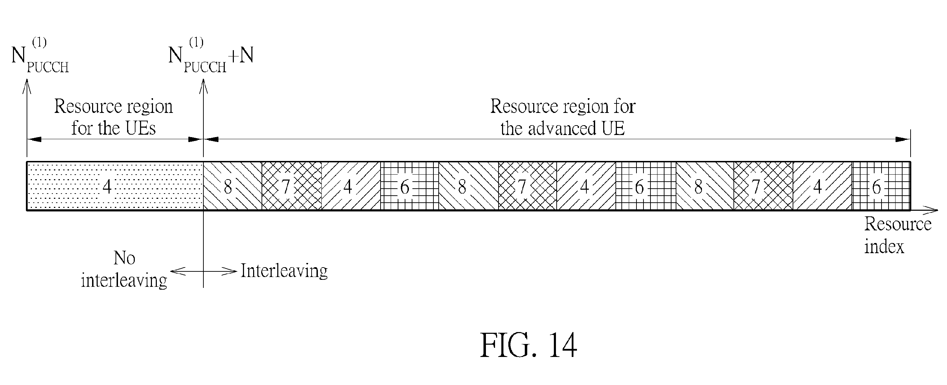

Fig. 14 is a schematic diagram of resource regions according to an example of the present invention. Fig. 14 is used as an example for illustrating the resource regions in which the HARQ resources are located. As shown in Fig. 14, a first resource region determined according to the association index 4 is different from a second resource region determined according to the new association set (8, 7, 4, 6). The start of the resource index for the first resource region is $N_{PUCCH}^{(1)}$, and the start of the resource index for the second resource region is $N_{PUCCH}^{(1)} + N$ (or a new value $N_{PUCCH,advanced}^{(1)}$). In addition, the HARQ resource determined according to the association index 4 is not interleaved and is only used for transmitting the HARQ feedback by the legacy UE, while the HARQ resource determined according to the new association set (8, 7, 4, 6) is interleaved in the second resource region and is used for transmitting the HARQ feedback by the advanced UE.

Those skilled in the art will be able to readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 30.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 30.

To sum up, the present invention provides a method of handling HARQ resource for a FDD carrier. An advanced UE can mitigate effects to operations of a legacy UE, when transmitting a HARQ feedback via the HARQ resource of the FDD carrier which is also used by the legacy UE. Collision of the HARQ resources is solved. As a result, both the advanced UE and the legacy UE can operate regularly.

**Claims**

1. A method of determining hybrid automatic repeat request (HARQ) resource of an uplink (UL) subframe of a frequency-division duplexing (FDD) carrier for an advanced communication device, **characterized by** the method comprising:

   determining an association index according to an operation of the FDD carrier (402);
   determining a new association set according to the association index and an association set of the UL subframe of an uplink/downlink (UL/DL) configuration (404); and
   determining the HARQ resource of the UL subframe according to the association index and the new association set (406).

2. The method of claim 1, further comprising:

   transmitting a HARQ feedback via the HARQ resource, to respond to at least one reception performed in at least one previous DL subframe of the FDD carrier.

3. The method of any of claims 1-2, **characterized in that** the association index does not overlap with the new association set.

4. The method of any of claims 1-3, **characterized in that** a resource region corresponding to the association index does not overlap with a resource region corresponding to the new association set, a starting point of a resource region corresponding to the new association set is at least determined according to a value configured by a higher layer signaling, or a starting point of a resource region corresponding to the new association set is at least determined according to a maximum number of control channel elements of the FDD carrier.

5. The method of any of claims 1-4, **characterized in that** a starting point of a resource region corresponding to the new association set is at least determined according to a total number of control channel elements of another DL subframe in which a reception is performed and the reception triggers a HARQ feedback in the UL subframe.

6. The method of any of claims 1-5, further comprising:

   determining at least one sequence index corresponding to the association index and the new association set, respectively; and
   determining the HARQ resource of the UL subframe according to the at least one sequence index, the association index and the new association set.

7. The method of any of claims 1-5, further comprising:

   determining at least one sequence index corresponding to the new association set, respectively; and
   determining the HARQ resource of the UL subframe according to the at least one sequence index and the new association set.

8. The method of any of claims 1-7, **characterized in that** a set of the at least one sequence index corresponding to the new association set is related to one of the at least one sequence index corresponding to the association index.

9. The method of any of claims 1-8, **characterized in that** the advanced communication device determines the HARQ resource of the UL subframe according to the association index, the new association set and the number of the first control channel element (CCE) $n_{CCE}$ of corresponding DL control information (DCI), wherein the DCI indicates a reception that is to be responded by a HARQ feedback transmitted via the HARQ resource.

10. A method of determining hybrid automatic repeat request (HARQ) resource of an uplink (UL) subframe of a frequency-division duplexing (FDD) carrier for an advanced communication device, **characterized by** the method comprising:

    determining a starting point of a resource region corresponding to a new association set, wherein the resource region corresponding to the new association set is different from a resource region corresponding to an association index determined according to an operation of the FDD carrier (1102);
    determining that the new association set is an association set of the UL subframe of a UL/downlink (UL/DL) configuration (1104); and

determining the HARQ resource of the UL subframe according to the new association set (1106).

11. The method of claim 10, further comprising:

transmitting a HARQ feedback via the HARQ resource, to respond to at least one reception performed in at least one previous DL subframe of the FDD carrier.

12. The method of any of claims 10-11, **characterized in that** the starting point of the resource region corresponding to the new association set is at least determined according to a value configured by a higher layer signaling, the starting point of the resource region corresponding to the new association set is at least determined according to a maximum number of control channel elements of the FDD carrier, or the starting point of the resource region corresponding to the new association set is at least determined according to a total number of control channel elements of another DL subframe in which a reception is performed and the reception triggers a HARQ feedback in the UL subframe.

13. The method of any of claims 10-12, **characterized in that** the advanced communication device determines the HARQ resource of the UL subframe according to the new association set and the number of the first control channel element (CCE) $n_{CCE}$ of corresponding DL control information (DCI), wherein the DCI indicates a reception that is to be responded by a HARQ feedback transmitted via the HARQ resource.

14. The method of any of claims 1-13, **characterized in that** the FDD carrier is managed by a first network, and the UL/DL configuration corresponds to a time-division duplexing (TDD) carrier is managed by a second network.

15. A communication device capable of handling hybrid automatic repeat request (HARQ) resource of an uplink (UL) subframe of a frequency-division duplexing (FDD) carrier according to any of claims 1-14.

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

FIG. 1

20

```
              ┌─────────────────────────┐
              │         Network         │
              └─────────────────────────┘
                    /      |       \
                   /   ……  |        \
         ┌──────────────┐ ┌──────────────┐ ┌──────────────┐
         │ Advanced UE  │…│ Advanced UE  │ │  Legacy UE   │
         └──────────────┘ └──────────────┘ └──────────────┘
```

# FIG. 2

30

314 — Program code

Processing means — 300

Storage unit

310

Communication interfacing unit — 320

30

FIG. 3

40

```
        ┌─────────┐ 400
        │  Start  │
        └─────────┘
             │
             ▼
┌──────────────────────────────────────┐ 402
│  Determine an association index       │
│  according to an operation of the     │
│  FDD carrier                          │
└──────────────────────────────────────┘
             │
             ▼
┌──────────────────────────────────────┐ 404
│  Determine a new association set      │
│  according to the association index   │
│  and an association set of the UL     │
│  subframe of a UL/DL configuration    │
└──────────────────────────────────────┘
             │
             ▼
┌──────────────────────────────────────┐ 406
│  Determine the HARQ resource of the   │
│  UL subframe according to the         │
│  association index and the new        │
│  association set                      │
└──────────────────────────────────────┘
             │
             ▼
        ┌─────────┐ 408
        │   End   │
        └─────────┘
```

FIG. 4

—50

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | - | - | 6 | - | 4 | - | - | 6 | - | 4 |
| 1 | - | - | 7, 6 | 4 | - | - | - | 7, 6 | 4 | - |
| 2 | - | - | 8, 7, 4, 6 | - | - | - | - | 6, 5, 4, 7 | - | - |
| 3 | - | - | 7, 6, 11 | 6, 5 | 5, 4 | - | - | - | - | - |
| 4 | - | - | 12, 8, 7, 11 | 6, 5, 4, 7 | - | - | - | - | - | - |
| 5 | - | - | 13, 12, 9, 8, 7, 5, 4, 11, 6 | - | - | - | - | - | - | - |
| 6 | - | - | 7 | 7 | 5 | - | - | 7 | 7 | - |

FIG. 5

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | - | - | 6,5 | 5, 4 | 4 | - | - | 6, 5 | 5, 4 | 4 |
| 1 | - | - | 7, 6 | 6, 5, 4 | - | - | - | 7, 6 | 6, 5, 4 | - |
| 2 | - | - | 8, 7, 6, 5, 4 | - | - | - | - | 8, 7, 6, 5, 4 | - | - |
| 3 | - | - | 11, 10, 9, 8, 7, 6 | 6, 5 | 5, 4 | - | - | - | - | - |
| 4 | - | - | 12, 11, 10, 9, 8, 7 | 7, 6, 5, 4 | - | - | - | - | - | - |
| 5 | - | - | 13, 12, 11, 10, 9, 8, 7, 6, 5, 4 | - | - | - | - | - | - | - |
| 6 | - | - | 8, 7 | 7,6 | 6, 5 | - | - | 7 | 7, 6, 5 | - |

FIG. 6

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| Legacy UE (FDD) | 4 | 4 | 4 | 4 | 4 | 4 | 4 | 4 | 4 | 4 |
| Advanced UE (UL/DL configuration 2) | - | - | 8, 7, 4, 6 | - | - | - | - | 8, 7, 4, 6 | - | - |
| Advanced UE (New) | - | - | 4, 8, 7, 6 | - | - | - | - | 4, 8, 7, 6 | - | - |

HARQ timeline of DL transmission for
advanced UE (follow UL/DL configuration 2)

HARQ timeline of DL transmission
for legacy UE (follow FDD)

FIG. 7

EP 2 858 290 A1

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| Legacy UE (FDD) | 4 | 4 | 4 | 4 | 4 | 4 | 4 | 4 | 4 | 4 |
| Advanced UE (UL/DL configuration 1) | - | - | 7, 6 | 4 | - | - | - | 7, 6 | 4 | - |
| Advanced UE (New) | - | - | 4, 7, 6 | 4 | - | - | - | 4, 7, 6 | 4 | - |

For the legacy UE    For the advanced UE

Same HARQ resource region could be shared for the UEs

FDD (UL)

HARQ timeline of DL transmission for advanced UE (follow UL/DL configuration)

HARQ timeline of DL transmission for legacy UE (follow FDD)

FIG. 8

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| Legacy UE (FDD) | 4 | 4 | 4 | 4 | 4 | 4 | 4 | 4 | 4 | 4 |
| Advanced UE (UL/DL configuration 3) | - | - | 7, 6, 11 | 6, 5 | 5, 4 | - | - | - | - | - |
| Advanced UE (New) | - | - | 7, 6, 11 | 6, 5 | 4, 5 | - | - | - | - | - |

FIG. 9

FIG. 10

FIG. 11

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| Legacy UE (FDD) | 4 | 4 | 4 | 4 | 4 | 4 | 4 | 4 | 4 | 4 |
| Advanced UE (UL/DL configuration 2) | - | - | 8, 7, 4, 6 | - | - | - | - | 8, 7, 4, 6 | - | - |
| Advanced UE (New) | - | - | 4, 8, 7, 4, 6 | - | - | - | - | 4, 8, 7, 4, 6 | - | - |

For the legacy UE — For the advanced UE

FDD (UL): 0 1 2 3 4 5 6 7 8 9 0 1 2 3 4 5 6 7
U U U U

FDD (UL): 0 1 2 3 4 5 6 7 8 9 0 1 2
U U U U U U U U U U U U

FDD (UL): D S D D D S D D D S D

HARQ timeline of DL transmission for advanced UE (follow UL/DL configuration)

FDD (UL): D D D D D D D D D D D D D

HARQ timeline of DL transmission for legacy UE (follow FDD)

FIG. 12

| UL/DL configuration | Subframe number | | | | | | | | | |
|---|---|---|---|---|---|---|---|---|---|---|
| | 0 | 1 | 2 | 3 | 4 | 5 | 6 | 7 | 8 | 9 |
| Legacy UE (FDD) | 4 | 4 | 4 | 4 | 4 | 4 | 4 | 4 | 4 | 4 |
| Advanced UE (UL/DL configuration 0) | - | - | 6 | - | 4 | - | - | 6 | - | 4 |
| Advanced UE (New) | - | - | 6 | - | 4,4 | - | - | 6 | - | 4,4 |

For the legacy UE    For the advanced UE

FIG. 13

EP 2 858 290 A1

$N_{PUCCH}^{(1)}$  $N_{PUCCH}^{(1)}+N$

Resource region for the UEs

Resource region for the advanced UE

| 4 | 8 | 7 | 4 | 6 | 8 | 7 | 4 | 6 | 8 | 7 | 4 | 6 |

Resource index

No interleaving ← → Interleaving

FIG. 14

Europäisches
Patentamt

European
Patent Office

Office européen
des brevets

# EUROPEAN SEARCH REPORT

Application Number

EP 14 18 6814

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/109099 A1 (LG ELECTRONICS INC [KR]) 25 July 2013 (2013-07-25) * abstract * | 1-15 | INV. H04L1/18 H04L5/00 |
| E | & EP 2 806 575 A1 (LG ELECTRONICS INC [KR]) 26 November 2014 (2014-11-26) * page 4, paragraph 36 - page 5, paragraph 42 * * page 7, paragraph 52 - paragraph 54 * * page 9, paragraph 89 - page 10, paragraph 95 * * page 14, paragraph 115 - page 16, paragraph 132 * * page 16, paragraph 140 * | 1-13,15 | |
| X | WO 2013/055174 A2 (LG ELECTRONICS INC [KR]) 18 April 2013 (2013-04-18) * abstract * | 1,13-15 | |
| E | & US 2014/314031 A1 (KIM HAKSEONG [KR] ET AL) 23 October 2014 (2014-10-23) * page 4, right-hand column, paragraph 51 * * page 8, left-hand column, paragraph 88 - page 9, left-hand column, paragraph 96 * * page 10, left-hand column, paragraph 104 - paragraph 107 * * page 12, left-hand column, paragraph 133 - right-hand column, paragraph 133 * * page 16, left-hand column, paragraph 165 - right-hand column, paragraph 168 * | 1-13,15 | TECHNICAL FIELDS SEARCHED (IPC) H04L |

-/--

The present search report has been drawn up for all claims

| Place of search | Date of completion of the search | Examiner |
|---|---|---|
| The Hague | 7 January 2015 | Papantoniou, Antonis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 18 6814

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/110598 A2 (LG ELECTRONICS INC [KR]; AHN JOON KUI [KR]; LEE JUNG HOON [KR]; YANG S) 30 September 2010 (2010-09-30) * page 8, paragraph 43 - page 10, paragraph 55 * * page 12, paragraph 62 - page 13, paragraph 66 * * page 14, paragraph 68 - page 15, paragraph 70 * ----- | 1,13-15 | |

TECHNICAL FIELDS
SEARCHED       (IPC)

The present search report has been drawn up for all claims

| Place of search | Date of completion of the search | Examiner |
|---|---|---|
| The Hague | 7 January 2015 | Papantoniou, Antonis |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 18 6814

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2015

| Patent document cited in search report | | Publication date | Patent family member(s) | | Publication date |
|---|---|---|---|---|---|
| WO 2013109099 | A1 | 25-07-2013 | CN | 104054280 A | 17-09-2014 |
| | | | CN | 104054293 A | 17-09-2014 |
| | | | EP | 2806575 A1 | 26-11-2014 |
| | | | EP | 2806592 A1 | 26-11-2014 |
| | | | KR | 20140122722 A | 20-10-2014 |
| | | | KR | 20140123527 A | 22-10-2014 |
| | | | US | 2014328312 A1 | 06-11-2014 |
| | | | US | 2014341149 A1 | 20-11-2014 |
| | | | WO | 2013109088 A1 | 25-07-2013 |
| | | | WO | 2013109099 A1 | 25-07-2013 |
| WO 2013055174 | A2 | 18-04-2013 | KR | 20140084140 A | 04-07-2014 |
| | | | US | 2014314031 A1 | 23-10-2014 |
| | | | WO | 2013055174 A2 | 18-04-2013 |
| WO 2010110598 | A2 | 30-09-2010 | EP | 2399359 A2 | 28-12-2011 |
| | | | KR | 20100107393 A | 05-10-2010 |
| | | | US | 2011292900 A1 | 01-12-2011 |
| | | | WO | 2010110598 A2 | 30-09-2010 |

EPO FORM P0459

For more details about this annex : see Official Journal of the European Patent Office, No. 12/82